# EUROPEAN PATENT SPECIFICATION

(11) **EP 4 285 454 B1**
(45) Date of publication and mention of the grant of the patent: **29.10.2025**
(21) Application number: 21703989.0
(22) Date of filing: 26.01.2021
(51) Int. Cl.: H02J 3/26

(54) **A MULTIPHASER DEVICE AND METHOD FOR UNINTERRUPTED AC POWER SWITCHING BETWEEN SOURCES OF SAME OR DIFFERENT PHASES**
MEHRPHASEN-VORRICHTUNG UND VERFAHREN ZUR UNTERBRECHUNGSFREIEN WECHSELSTROMSCHALTUNG ZWISCHEN QUELLEN GLEICHER ODER VERSCHIEDENER PHASEN
DISPOSITIF DE MISE EN PHASE MULTIPLE ET PROCÉDÉ DE COMMUTATION DE COURANT CA SANS INTERRUPTION ENTRE DES SOURCES DE PHASES IDENTIQUES OU DIFFÉRENTES

(43) Date of publication of application: 06.12.2023
(73) Proprietor: MULTICHARGE OÜ, 12113 Tallinn (EE)
(72) Inventor: KILTER, Hindrik, 12113 Tallinn (EE); HÄRM, Juhan, 12113 Tallinn (EE); VAHTRAS, Sander, 12113 Tallinn (EE)
(74) Representative: Väänänen, Janne Kalervo
(86) International application number: PCT/IB2021/050583
(87) International publication number: WO 2022/162415

(56) References cited:
- CN-A- 105 762 797
- CN-A- 106 451 500
- CN-A- 107 528 328
- US-A1- 2013 141 142

## Description

### TECHNICAL FIELD

The invention belong to the field of electric engineering, in particular the invention relates to a multiphaser device and a method for uninterrupted AC power switching between multiple sources of same or different phases.

### BACKGROUND ART

Modern power distribution grids are almost exclusively three phase systems where each conductor carries alternating current of the same frequency and voltage with a phase difference of third of a cycle between each. Compared with a single-phase system that uses two conductors (phase and neutral), a three-phase system with three conductors (three phases) can transmit up to three times as much power while using the same amount of wires.

On grid level it is important that three-phase power systems are balanced i.e. phases are loaded equally. At power plant level, loads are quite well balanced. Unbalance happens down the line at distribution level where most notably there are unequal impedances, unequally distributed single-phase loads and asymmetrical three-phase equipment in use.

Unbalance in three-phase power system has several adverse effects: increased line losses, overloading substation transformers, tripping over current breakers, voltage fluctuations, reduced life of induction motors, etc. Hence phase load balancing is important for stable operation of three-phase power systems.

From the viewpoint of end customer, compared with one-phase connection, three-phase connection allows to essentially triple usable grid connection. Here again it is important that loads between phases are balanced. In case of unbalanced loads, at extreme, when one phase is fully loaded and the other two are not, two thirds of total capacity is left unused. Large unbalanced single-phase loads would also cause more current to flow from that phase compared with other phases and would cause voltage drop at that phase. From the customer viewpoint it is also highly beneficial to have balanced phase loads. When loads are shared equally, available grid connection is utilized more efficiently and while providing the same total power, maximum current on each individual phase is reduced. This allows the customer to manage with a smaller grid connection rating, thus reducing cost.

Most appliances found in households, apartment buildings and offices are one-phase. When new power systems and buildings are designed, one-phase loads are distributed between phases based on theoretical predictions so that each phase is loaded equally. This is a static solution, but in reality, over time load distribution between phases change. Some appliances will be added or removed, consumption habits change, some parts of buildings will be vacant at various times and in addition, seasonal changes - these all-affect system balances. Only way to fix it in conventional systems would be to manually rewire.

In patent application US 2012/0078428, 29.03.2012, EANDIS is described a smart metering device comprising voltage inputs (L1, L2, L3) for connection to a three-phase distribution network, low voltage (LV) output circuits towards the end user mains network, a (built-in or external) power circuit connecting the inputs and outputs, a modem "WAN I/F" for sending and receiving messages over the power distribution network and/or over other networks, a controller "CPU/DSP" for controlling switching operations in response to control messages which can be received over for example the power distribution network from a communication server/center associated with the power distribution network, and a phase selector at the inputs by means of which the outputs can be switched to different phases of the distribution network in response to received control messages. There is mentioned possible use of semiconductors but very vaguely.

In US patent number US6,018,203, 25.01.2000, Target Hi-Tech Electronics Ltd. is described an apparatus for and a method of evenly distributing the electrical load across all three phases of a three phase power distribution network. Three phase electrical power (L1, L2, L3) is supplied by an electric power utility where phases (L1, L2, L3) are over current protected by a utility circuit breaker. The output of utility circuit breaker appears at the service entrance to a residence or commercial facility. Current sensors measure the current flowing through phases L1, L2, L3 respectively. The output of current sensors is monitored by a processor. Processor can be any suitable computing device such as a microprocessor, microcontroller, personal computer, etc. The load distribution in three phase power networks is described in patent general terms. Is a simple switch based switching method / device and does not use semiconductors and does not provide uninterrupted switching.

In patent application US 2017/0057369, 2.03.2017, Zaptec IP AS is described a power supply system suitable for converting and/or isolating charging power supplied to a vehicle charging system within battery operated vehicle. The system comprises an isolation transformer allowing at least one of electric isolation and voltage conversion between a primary power source and the vehicle charging system. The primary power source may be a power distribution system such as a TN earthing system, a TT earthing system or an IT earthing system. The transformer comprises a primary side wherein one or more terminals of the primary side are electrically connectable to the primary power source and a secondary side, wherein one or more terminals of the secondary side are electrically connectable to the vehicle charging system, an EVSE control device electrically connectable to the vehicle charging system, a data communication line connected to the EVSE control device and connectable to the vehicle charging system, which data communication line allows, when connected to the vehicle charging system, transmission of control signals to the vehicle charging system, monitoring coupling between secondary side and the vehicle charging system and monitoring at least one parameter related to the charging status of the vehicle charging system during charging. The described power supply system uses an isolation transformer (solid state transformer) for power conversion. Therefore, said power supply system is more similar to a DC charger as they are not switching phases, but instead converting them and the system does not provide uninterrupted switching. Document CN106300398 discloses a multiphase switch using relays where the switching time is regularly corrected regarding the zero crossing of the different signals.

The push to electrify transportation will cause even more unbalances in three-phase power grids as a lot of chargers for electric vehicles (EVs) will be installed into existing installations. One use case where a multiphaser according to present invention can provide huge benefits is in EV charging.

EVs can be charged using either alternating current (AC) or direct current (DC) chargers. EV batteries use high voltages and an inverter must be used to charge them. AC charger provides AC current to the EV and an inverter integrated into EV is used for charging the battery. DC chargers have the inverter integrated into the charger itself and provide high voltage DC current directly to car battery.

AC chargers are more common due to their low cost and simplicity compared to DC chargers. AC chargers have lower power output compared to DC chargers but for overnight charging in residential buildings or daily charging at office this is a non-issue.

AC chargers can use either one, two or three phases. Inverters integrated into today's EVs most commonly use one-phase AC connection for charging, i.e. AC chargers will load only one phase and other two phases are not connected. This will create two main problems

First problem is, if all chargers happen to be connected to the same phase, then the total charging power is limited by the capacity of one phase and it is only possible to utilize 1/3 of the potential grid connection capacity.

Second problem for the grid is significant unbalance between the phases when 100% of one phase is utilized by EV charging and remaining two phases are unused or minimally loaded.

Multiphaser, according to present invention, provides a novel solution for overcoming the above-mentioned problems. Multiphaser enables uninterrupted switching of the load to the least loaded phase, without any noticeable effect on consumers. Since it does not affect consumers, switching (phase load balancing) can be carried out as often as required to dynamically adapt to the situation. Multiphaser can be managed by a higher level load balancing controller that decides when and which phase to switch over to.

This is a huge benefit for power grids, operators and consumers:
1) Utilization of existing infrastructure is maximized;
2) Because of dynamically balanced phases, reserve factor of individual phase currents can be reduced;
3) Need of upgrading or rebuilding distribution networks is minimized;
4) New networks can be designed from ground up as dynamic not as static, grid capacity can be shifted to where the load is;
5) Power losses in distribution networks are reduced;
6) Total cost of grid connection is reduced both for grid operators and consumers.

The main feature of a multiphaser according to invention is that it enables to switch power between multiple sources of same or different phases without power interruption for the end user. With other existing solutions, phases can be disconnected and reconnected, but they all do so with noticeable delay for end user (devices disconnected and reconnected will be offline at least for some seconds).

Multiphaser solves the problem of how to switch power between multiple sources of same or different phases without power interruption.

### DISCLOSURE OF INVENTION

Multiphaser is a device and a method for uninterrupted AC power switching between multiple sources of same or different phases. One special use case of uninterrupted AC power switching is in optimizing how three phase power supply systems are utilized for electric vehicle (EV) charging.

Multiphaser has one output where AC load will be connected and two or more inputs where different power sources can be connected. Power sources at input can be of same or different phase in a multi-phase power system.

When switching load at output between different power sources and phases at input, maximum voltage gap is depending on the phase no more than 1/3 of cycle (6.6 ms for 50 Hz AC) or 1/6 of cycle (3.3 ms for 50 Hz AC). Switching between sources of same phase is done without any voltage gap. Multiphaser is also applicable for 60Hz AC systems.

### BRIEF DESCRIPTION OF DRAWINGS

Multiphaser according to invention will be described more detailed as follows with references to the drawings where in:
FIG 1 is shown basic schematic of multiphaser according to invention;
FIG 2 is shown basic schematics of multiphaser according to invention where the multiphaser comprises solid-state switches for fast and precise switching;
FIG 3 is illustrated output voltage diagram while switching ON phase during the multiphaser switching operation - switching ON phase, for example switching ON L2;
FIG 4 is illustrated output voltage diagram while switching OFF phase during the multiphaser switching operation - switching OFF phase, for example switching OFF phase L2;
FIG 5 is illustrated output voltage diagram while switching from one phase to other phase during the multiphaser switching operation - switching between sources, for example switching from phase L1 to phase L2;
FIG 6 is illustrated another output voltage diagram while switching from one phase to other phase during the multiphaser switching operation - switching between sources, for example switching from phase L1 to phase L3;
FIG 7 is illustrated status of the power relay during the multiphaser operation switching OFF for example phase L1 in the embodiment of the multiphaser shown in FIG 1;
FIG 8 is illustrated status of the power relay during the multiphaser operation switching ON for example switching on phase L1 in the embodiment of the multiphaser shown in FIG 1;
FIG 9 is illustrated status of the power relay during the multiphaser operation switching between sources, for example switching from phase L1 to phase L2 in the embodiment of the multiphaser shown in FIG 1;
FIG 10 is illustrated status of the power relay and the semiconductor switch during the multiphaser operation switching OFF for example phase L1 in the embodiment of the multiphaser shown in FIG 2;
FIG 11 is illustrated status of the power relay and the semiconductor switch during the multiphaser operation switching ON for example phase L1 in the embodiment of the multiphaser shown in FIG 2;
FIG 12 is illustrated status of the power relay and the semiconductor switch during the multiphaser operation switching between sources, for example switching from phase L1 to phase L2 in the embodiment of the multiphaser shown in FIG 2;
FIG 13 is shown how the multiphaser according to invention can shifts loads between phases depending on the actual loads each phase where first circuit breaker group has a load of 10A, second group 25A, third group 5A and fourth group 25A, whereas the main circuit breaker for the household is 32A;
FIG 14 is shown how the multiphaser according to invention can shifts loads between phases, depending on the actual loads of each phase, where third circuit breaker with a 5A load will be uninterruptedly switched from phase L1 to phase L2 whereas the total load for phase L1 would now be 30A and for phase L2 30A;
FIG 15 is shown a parking lot with 21 parking spots with statically connected electrical vehicles (EV) chargers where 9 EVs are connected to chargers, but only 3 EVs are able to charge because of 96A grid connection limit;
FIG 16 is shown a parking lot with 21 parking spots with electrical vehicles (EV) chargers including multiphaser according to present invention where 9 EVs are connected and able to charge with full power, because of dynamically sharing loads on all phases;
FIG 17 is shown conventional static use of three phase electric generator with multiple distribution boxes for one phase loads, i.e. in case where equipment is connected to phases so that first phase is loaded with 3kW, second phase with 6kW and third base with 21kW of power;
FIG 18 is shown use of three phase electric generator with multiple distribution boxes for one phase loads where a dynamic multiphaser solution has exactly the same equipment connected to same sockets and all phases are loaded equally as phases are switched between the consumers.

### DETAILED DESCRIPTION OF THE EMBODIMENTS

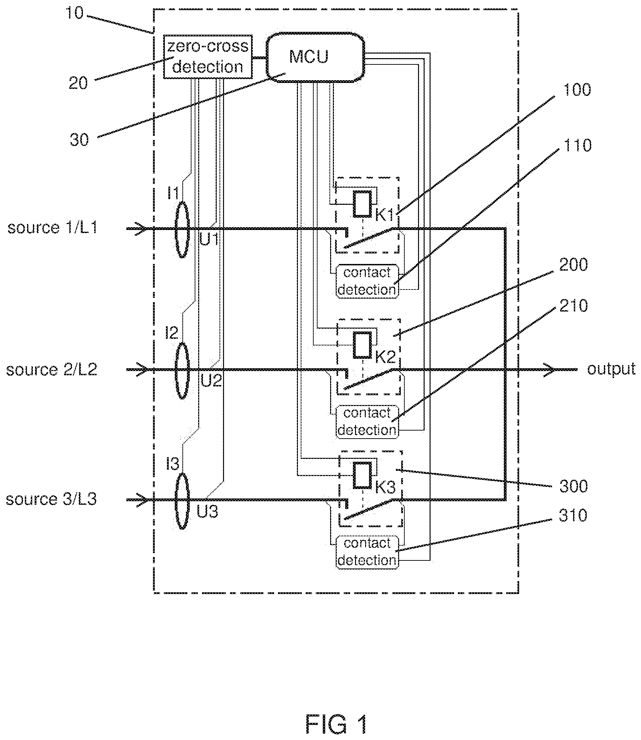

A multiphaser device 10 according to the present invention needs three key components for switching AC power uninterruptedly between multiple sources (see FIG 1, for example source 1, source 2, source 3) of same or different phases for example L1, L2, L3. It should be noted that the number of sources or phases is not limited to the embodiments described in the description below. According to the aim of the multiphaser to enable load sharing between multiple sources of same or different phases, the number of sources and phases may be more than the three sources/phases described in the following embodiments. The multiphaser can be used also in systems where only two sources with same or different phases are used or present.

These three components of the multiphaser according to invention are (see FIG 1):
- A microcontroller (MCU) 20 for managing switching operations of the multiphaser;
- An AC waveform zero-crossing detection circuit 30; the detection circuit 30 is connected to the MCU. The circuits measures voltage U1, U2, U3 and current I1, I2, I3 of each power source and detects waveform zero-crossing state of each phase L1, L2, L3 of the power source.
- A power relay 100, 200, 300 (K1, K2, K3) for each power source with a power relay contact detection circuit 110, 210, 310 for each power relay. A power relay (100, 200, 300) input is connected to the power source and output connected to the common output of the multiphaser. The power relay control circuit is connected to the MCU. In parallel to the power relay is connected a power relay contact detection circuit (110, 210, 310) for detecting power relay contact state, and the power relay contact detection circuit is connected for transmitting the power relay state signal to the MCU.

In alternative embodiment of the multiphaser according to invention together with power relay 100, 200, 300 a semiconductor-based switch 120, 220, 320 (Q1, Q2, Q3) is used for fast and precise switching, which improves device reliability.

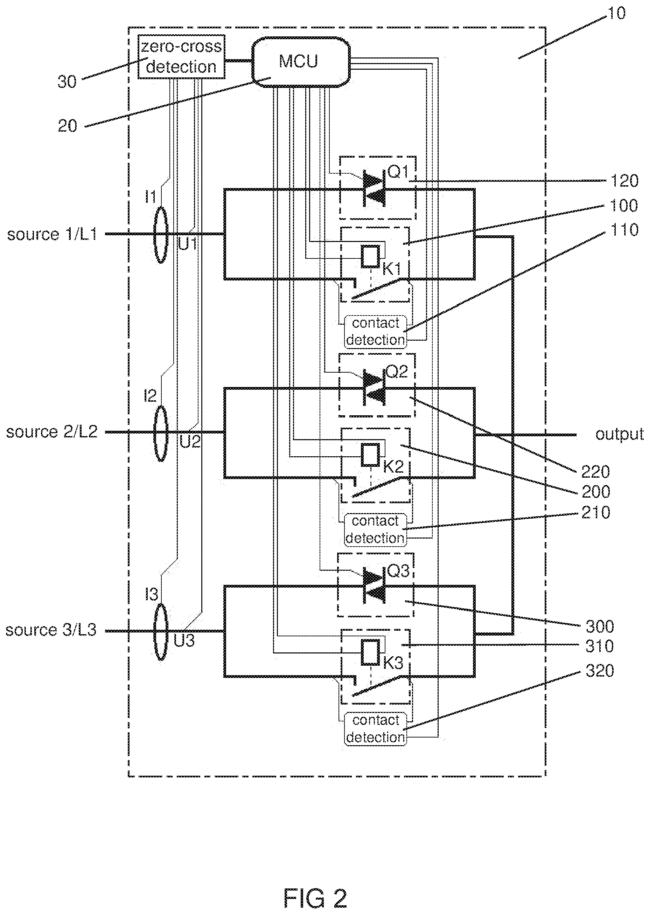

A basic schematic of such multiphaser 10 according to invention is shown in FIG 2 (with semiconductor switches Q1, Q2, Q3). In parallel to each power relay (100, 200, 300) is connected a semiconductor switch (120, 220, 320) for fast and precise switching of the AC power.

In steady state operation, low resistance latching power relay 100 takes the load to minimize losses. During switchover, semiconductor switch 120 takes the load for a brief moment and allow fast and precise switching of the AC power source. Power relays 100, 200, 300 are always switched under no load condition, which allows to considerably extend their lifetime. Combining the usage of semiconductor switch 120 and power relay 100 allows to achieve fast and precise switching timing and low active state resistance. At the same time, it is possible to use relatively low power semiconductors without cooling because of their short operation time. All the device functions are controlled by microcontroller 20.

Switching from phase 1 to phase 2 the voltage gap time is 1/3 of the cycle (6.6ms for 50Hz AC). Switching from phase 1 to phase 3 the voltage gap time is 1/6 of the cycle (3.3ms for 50Hz AC). All other switching orders are actually same, as either 1 to 2 or 1 to 3. These short switching gaps can be considered as uninterrupted for all AC consumers. In case of switching between sources of same phase, there will be no interruption in output at all.

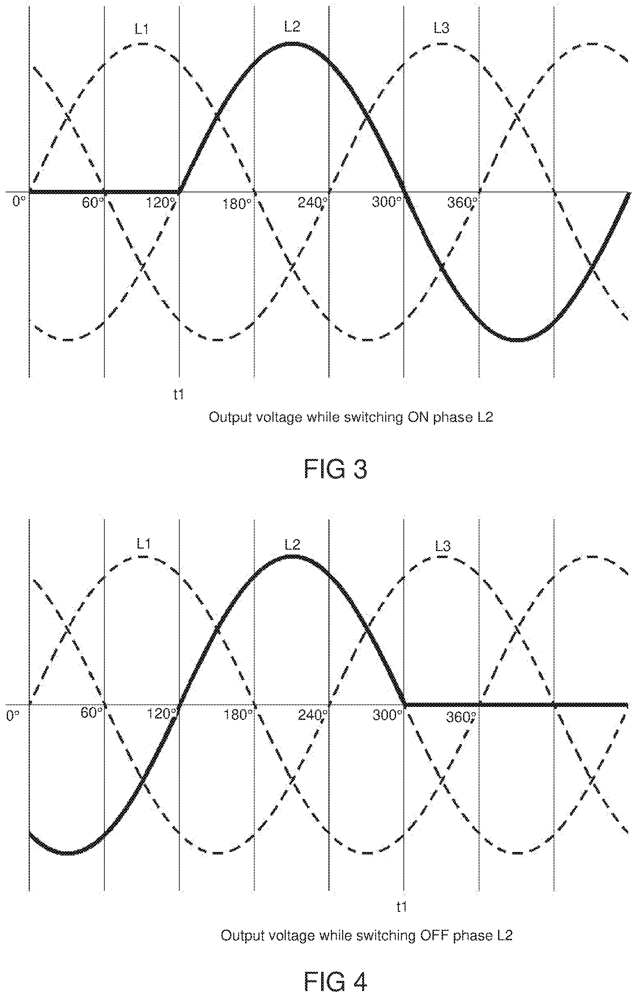

Multiphaser 10 performs three types of switching operations: switching on; switching between sources; and switching off. Multiphaser output voltage diagram for each operation is illustrated on FIG 3, FIG 4, FIG 5 and FIG 6. These operations differ between the embodiment of multiphaser using semiconductor switches 120, 220, 320 and the embodiment of multiphaser using only power relays.

Achieving uninterrupted switching is not possible using only mechanical relays without special hardware and software, because of the switch off (break time) and switch on (make time) delays. These delays can change during the lifetime of the relay and also as temporary fluctuations in different operating conditions.

While switching between different phases, it must be guaranteed that the next phase is not connected before the previous phase has disconnected, otherwise a short circuit will occur between the two phases. Without knowing the exact brake time, it is needed to create some safe delay between switching relays to prevent any short circuit, but this would always cause interruption in AC power.

To achieve uninterrupted switching of AC power, it is needed to make the switching exactly at current and voltage zero crossing. It means, before doing any switching, make and brake times for the relays need to be known very precisely. The actual moment of activating and deactivating of each relay would be calculated based on the make and brake times so that the actual switching events happen at zero-crossing.

For the uninterrupted switching to work fast and precisely with mechanical relays, special control methods are implemented. This involves measuring the actual make and break time of each relay using contact detection circuit. First measurement is done in initial setup and later during normal operation retested during each relay action without affecting device operation. Using the actual make/break time, microcontroller calculates the exact moment it is required to activate/deactivate the relays. This allows to make the relay always exactly at the AC voltage zero-crossing and break at current zero-crossing. Because switching is done at zero-crossing, power relays are always switched under no load condition and thus their lifetime is extended. Contact detection circuit also adds additional safety to prevent possible short circuit between phases in case relay is switching off too late or is stuck.

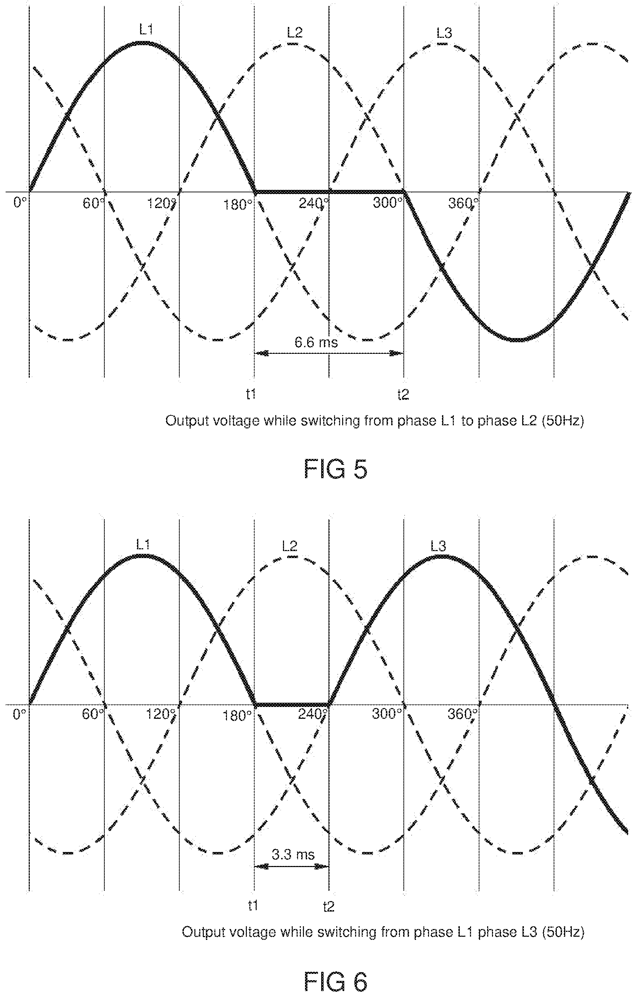

Switching from phase 1 to phase 2 (see FIG 5), the voltage gap time is 1/3 of the cycle (6.6 ms for 50 Hz AC). Switching from phase 1 to phase 3 (see FIG 6) the voltage gap time is 1/6 of the cycle (3.3 ms for 50 Hz AC). All other switching orders are technically same as either 1 to 2 or 1 to 3. These short switching gaps can be considered as uninterrupted for all AC consumers. In case of switching between sources with same phase, there will be no interruption in output at all.

Below are described the switching operations for the embodiment of multiphaser with power relays only (see embodiment of the multiphaser in FIG 1).

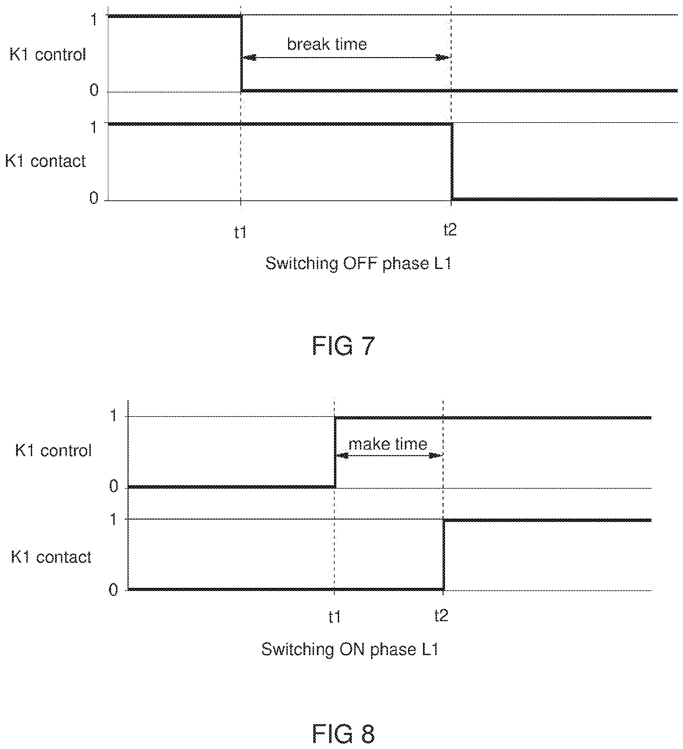

### Switching OFF (see diagram in FIG 7)

When command is received to switch off, then micro controller of MCU 30 finds the next current zero-crossing and advances power relay 100 deactivation at time point t1 (see diagram in FIG 7) based on the break time, so that the actual break event at time point t2 happens exactly in current zero crossing.

### Switching ON (see diagram in FIG 8)

In off state the output is disconnected. When device receives switching command for one of the sources, micro controller of the MCU 30 finds the next voltage zero-crossing and advances relay activation at time point t1 (see diagram in FIG 8) based on the make time, so that the actual make event at time point t2 happens exactly in voltage zero crossing.

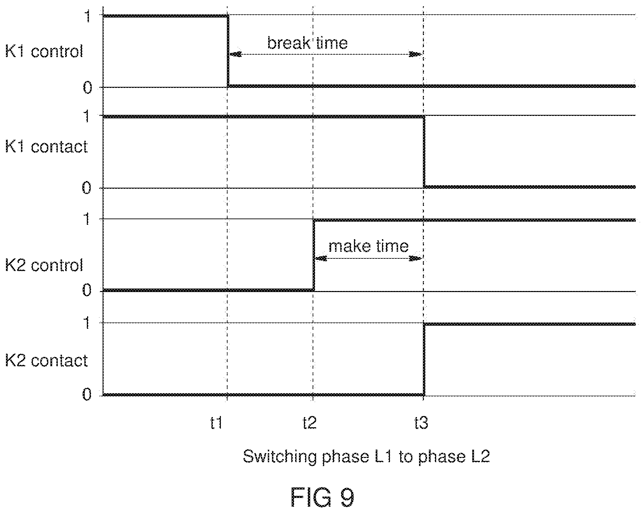

### Switching between sources (see diagram in FIG 9)

When command is received to switch source, then microcontroller of MCU 30 finds next suitable current zero-crossing on active source and the following suitable voltage zero crossing on the target source. First, active power relay 100 (K1) is deactivated at state change point t1, while advancing deactivation by break time. Target source power relay 200 (K2) is activated at time point t2 in advance to the voltage zero crossing by make time. Switching is completed when target source power relay 200 (K2) has been connected at time point t3.

Now are described the switching operations for the embodiment of multiphaser with semiconductor switches (see embodiment of the multiphaser in FIG 2).

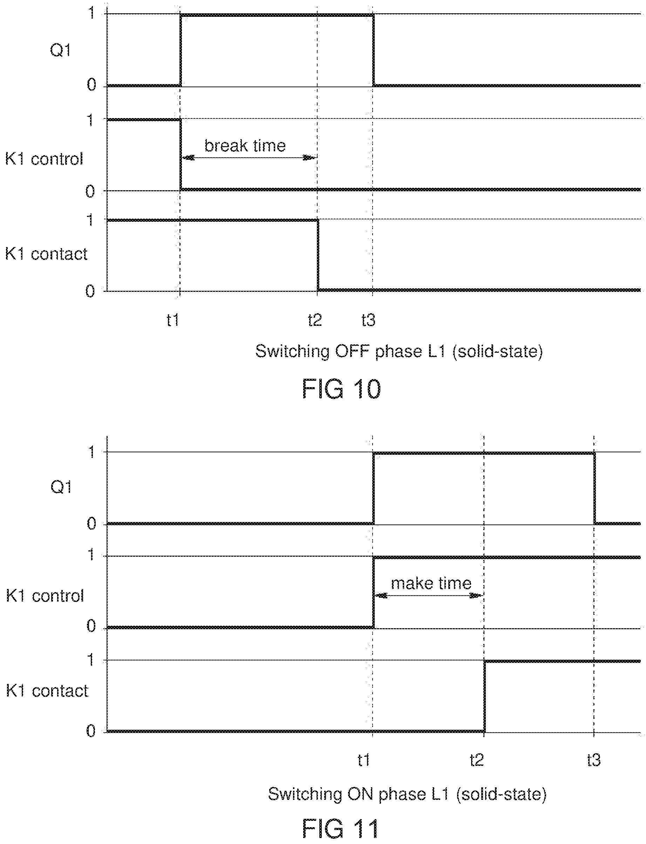

### Switching OFF (see diagram in FIG 10)

When command is received to switch off then semiconductor switch 120 is activated at time point t1 and power relay 100 is opened. When power relay 100 has opened at time point t2, semiconductor switch 120 is deactivated at time point t3 and power is cut at AC current zero crossing to eliminate transients.

### Switching ON (see diagram in FIG 11)

In off state the output is disconnected. When multiphaser receives switching command for one of the sources (phases L1, L2 or L3), semiconductor switch 120 (Q1) connects at time point t1 the selected source. This is always done at AC voltage zero crossing to eliminate transients. At the same time power relay 100 (K1) is connected, but as it is relatively slow, semiconductor switch 120 (Q1) will take the load as long as power relay 100 (K1) contact is complete at time point t2, after which semiconductor switch 120 (Q1) is deactivated at time point t3.

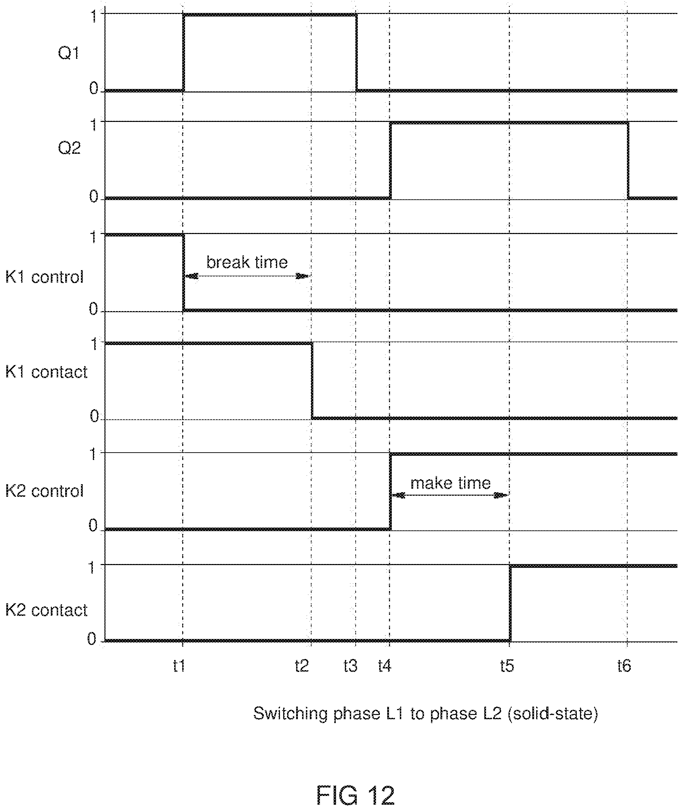

### Switching between sources (see diagram FIG 12)

When source 1(phase L1) is connected and command is received to switch to source 2 (phase L2), then semiconductor switch 120 (Q1) is activated at time point t1 (see diagram in FIG 12) and power relay 100 (K1) is opened. After power relay 100 (K1) has opened at time point t2, semiconductor switch 120 (Q1) is deactivated at time point t3 and power is cut at AC current zero crossing. Next, semiconductor switch 220 (Q2) is activated at time point t4 on the following AC voltage zero crossing and power relay 200 (K2) is connected at time point t4. Now the output has been switched to source 2 (phase L2) and semiconductor switch 220 (Q2) is deactivated at time point t6 after power relay 200 (K2) has completed the connection at time point t5.

### EXAMPLES OF DIFFERENT USE CASES

### Example 1: 3 room 80m2 apartment or household

Multiphaser 10 according to the invention can be used for switching loads between phases in residential buildings, offices, apartments or anywhere where three phase systems with one phase loads are used. Following example is for a 3 room 80m2 apartment.

When electrical installation is done, usually total loads behind main circuit breaker are higher than the allowed rated current for main circuit breaker. This is done so because usually not all appliances are switched on simultaneously. For residential loads main circuit breaker can be around 0.4-0.5 times smaller than the total load behind that circuit breaker. There is no written rule, but this factor of 0.4-0.5 is commonly used for residential loads.

In main distribution box one-phase loads are distributed among phases so that loads between phases would be equal. This design is static in its nature, meaning once the cabling is done it is difficult and costly to change the cabling layout. As life in general is not static and devices are removed and added to existing wiring, phases can become unbalanced and some phases can be overloaded at main circuit breaker while others are almost unused. Also sometimes actual usage of appliances can significantly differ from what the designer had in mind when designing electrical cabling.

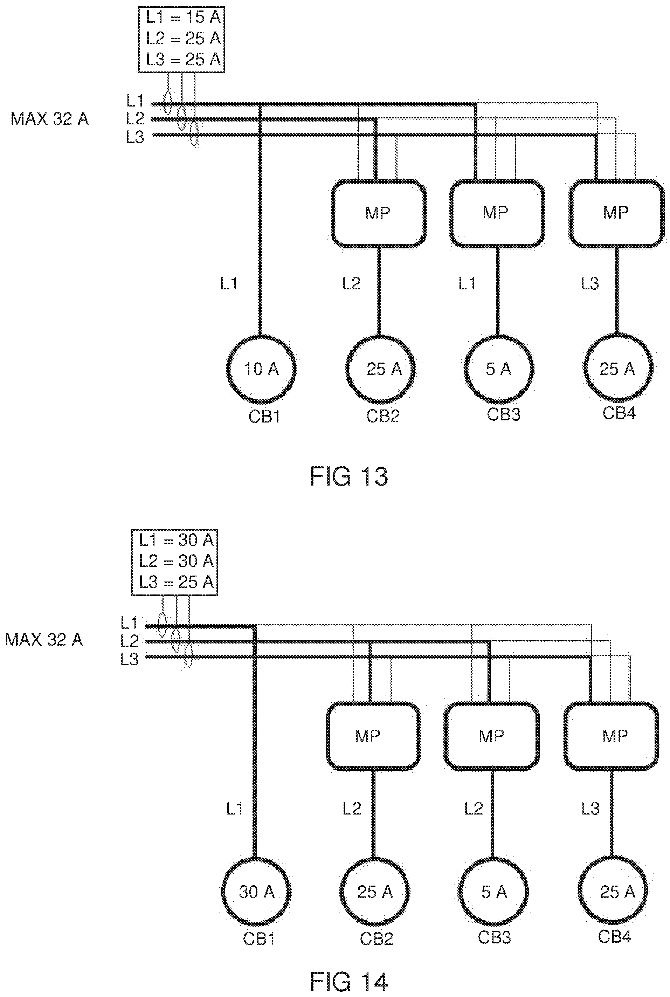

Below in the figures FIG 13 and FIG 14 are shown how multiphaser according to invention can shifts loads between phases depending on the actual loads each phase. In figure FIG 13, first circuit breaker group has a load of 10A, second group 25A, third group 5A and fourth group 25A. Main circuit breaker for the household is 32A. This is how much each phase can be loaded before the main circuit breaker trips due to overcurrent.

In figure FIG 13 first and third circuit breakers CB1, CB3 are connected to first phase L1. Second circuit breaker CB2 is connected to second phase L2 and fourth circuit breaker CB4 is connected to third phase L3. Total loads for L1is 15A, for L2 is 25A and for L3 is 25A.

Now if the load behind first circuit breaker CB1 increases to 30A, total load for phase L1 would be 35A (30A+5A). Main circuit breaker with a rated current of 32A would trip and the loads for each phase would be disconnected. With multiphaser according to invention, this is actually unnecessary and avoidable. As shown in Figure 14, third circuit breaker CB3 with a 5A load will be uninterruptedly switched from phase L1 to phase L2. Total load for phase L1 would now be 30A and for phase L2 30A (25A+5A).

Without the multiphaser main circuit breaker would have tripped, but the multiphaser according to invention allowed to shift loads form one phase to another so that main circuit breaker rating is not exceeded.

Traditionally the solution for overcoming such tripping has been to increase the grid capacity. Main circuit breaker has to be switched for a higher rating one. This is a costly solution, as the bigger grid connection is only needed at some peak times but connection fees would increase and have to be paid monthly. The multiphaser provides an alternative more cost-effective solution. By monitoring total consumption at input (main circuit breaker) and dynamically switching individual circuit breaker loads between phases, existing grid capacity can be fully used and there is no need for capacity increase. This can have huge impact on how future power grids are designed and used. The multiphaser will transform traditional static power grids into dynamic ones where loads can be distributed more efficiently.

Example 2: A parking lot (for example parking garage) with 21 spots for parking electrical vehicles (EV) where chargers for EVs are installed

A parking garage has a 96A three phase grid connection.

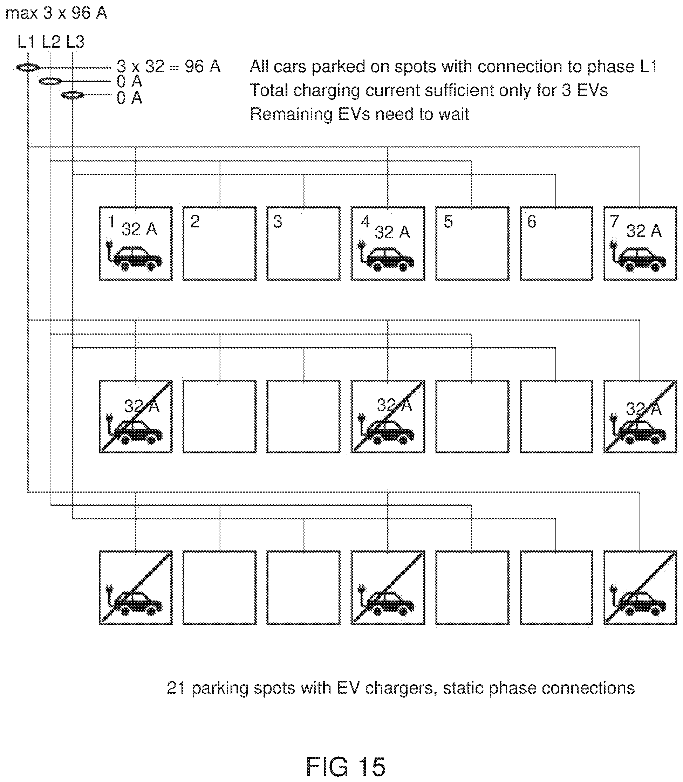

If we have EVs that can only use one phase for charging (as most EVs do), then theoretically all 9 chargers could be used as per the 9 chargers, as shown in figure FIG 15, we need 288A (32A per phase x 9 chargers = 288A) connection. The parking garage has 3 phase connection with each phase delivering 96A, so in total we can use 288A.

Problem with the above calculation is that the chargers are typically installed so that grid phases match charger phases. First phase L1 in chargers corresponds to phase L1 in the grid, the second phase L2 in chargers corresponds to phase L2 in the grid and third phase L3 in chargers corresponds to phase L3 in the grid. If all of the 9 chargers are installed like that, only 3 chargers could be used simultaneously. First phase would we loaded with 96A and no free capacity would be left. See FIG 15 "static phase connections".

Simple half-mitigation is to alternate the connection order between chargers. Chargers are connected to the grid with alternating phase sequence. First charger would still be connected using same phase sequence. The phase L1 in first charger would be connected to phase L1 in the grid, correspondingly phase L2 to phase L2 in the grid and phase L3 to phase L3 in the grid. Second charger would be connected so that phase L1 in charger would be connected to L2 in the grid. The phase L2 in the second charger would be connected to phase L3 in the grid and L3 to phase L1 in the grid. Third charger would be connected so that phase L1 in the charger would be connected to phase L3 in the grid. Phase L2 in the charger would be connected to phase L1 in the grid and phase L2 to phase L3 in the grid. In short this means that the phases are rotated between the three charges and phase L1 in each charger is connected to a different phase in the grid.

This is a simple half-solution to the problem. With this solution the problem is we can never know which charger will be actually used for charging. We have 9 chargers in total and it still can happen that out of the 9 charges the chargers with same phase will be chosen.

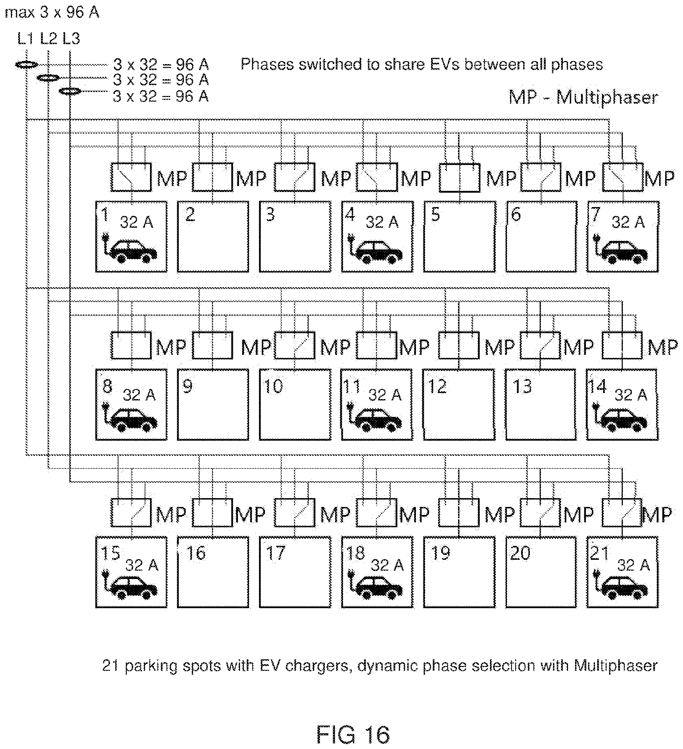

Using the multiphaser according to invention solves all the mentioned problems by enabling load management controller to dynamically manage to which phase the charger is connected. Any vehicle can be connected to any phase at any moment of time. This results in triple amount of vehicles that can be safely connected and charged with the same grid connection. See FIG 16 where is shown a dynamic phase selection with multiphaser.

Example 3: Priority current relays can be replaced with phase switching relay in the multiphaser

Priority relays are used when concurrent operation of more appliances / consumers is not possible and some non-priority appliances / consumers must be disconnected if the consumption for priority consumers exceeds certain pre-set value.

For example, priority relays are used for disconnecting electric heaters from the network if other appliances are switched on and total consumption exceeds a pre-set value. Priority relays allow consumers to select a smaller main circuit breaker and conductors, but at the same time to connect more appliances.

What happens with priority relays is that at some point when grid capacity is limited, some consumers will be disconnected. Here the multiphaser can provide an advantageous solution. In case of one-phase loads, instead of disconnecting non-priority loads, the multiphaser enables for load management controller to share the loads more evenly and avoid overloading single phase. If total grid capacity for the three phases is exceeded, the multiphaser can be still used to disconnect some of the non-priority loads so that priority loads are always connected.

Example 4: Three phase electric generator with multiple distribution boxes for one phase loads

Event organizers use generators for powering all kind of equipment, ranging from simple low load equipment to high load stage lighting and powerful speakers. Cabling is laid around the site and temporary distribution outlets installed. During the set-up of stage equipment various devices are plugged into those outlets. Outlets are connected to one of the three phases.

Problem with conventional solution is that it is hard to estimate how much load there will be for each phase. Cabling laid can be quite extensive with tens of outlet groups. During the event, loads will fluctuate within and between phases. What often happens is that one phase will become noticeably more loaded than the other two. What the unbalance does is, it overloads generator. Depending on the exact generator model, approximately 30% difference in loads between phases causes fluctuations in voltage and therefore reduces the quality of the electric energy. Already a 10% overload compared to nominal phase load could cause the generator to overheat and trip the circuit breaker.

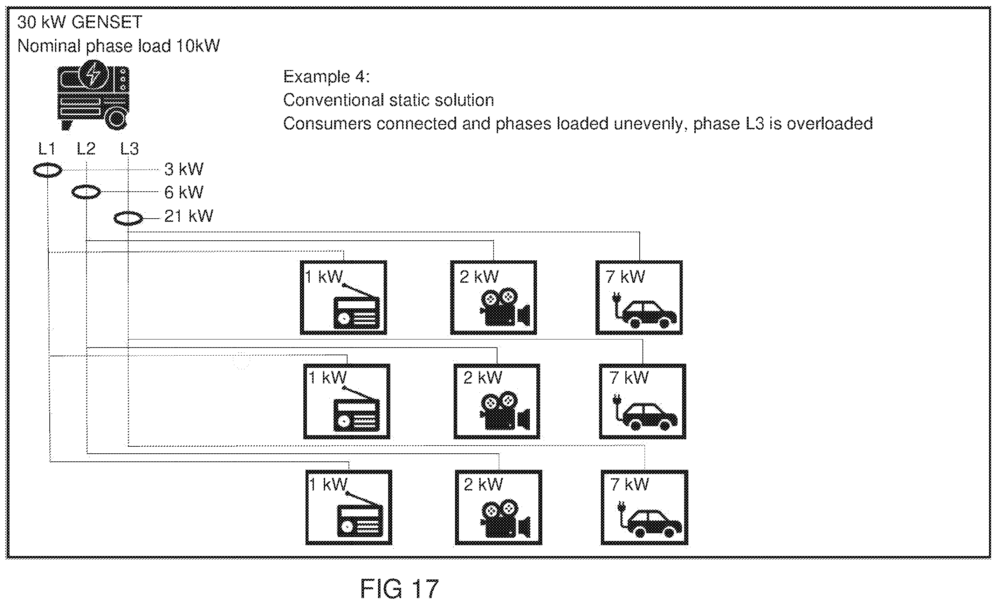

FIG 17 describing conventional static use case where equipment is connected to phases so that first phase is loaded with 3kW, second phase with 6kW and third base with 21kW of power. Total output of the generator is not exceeded, but phases are unevenly loaded, which will cause voltage fluctuations. Third phase is overloaded more than two times meaning it will overheat and trip in short time.

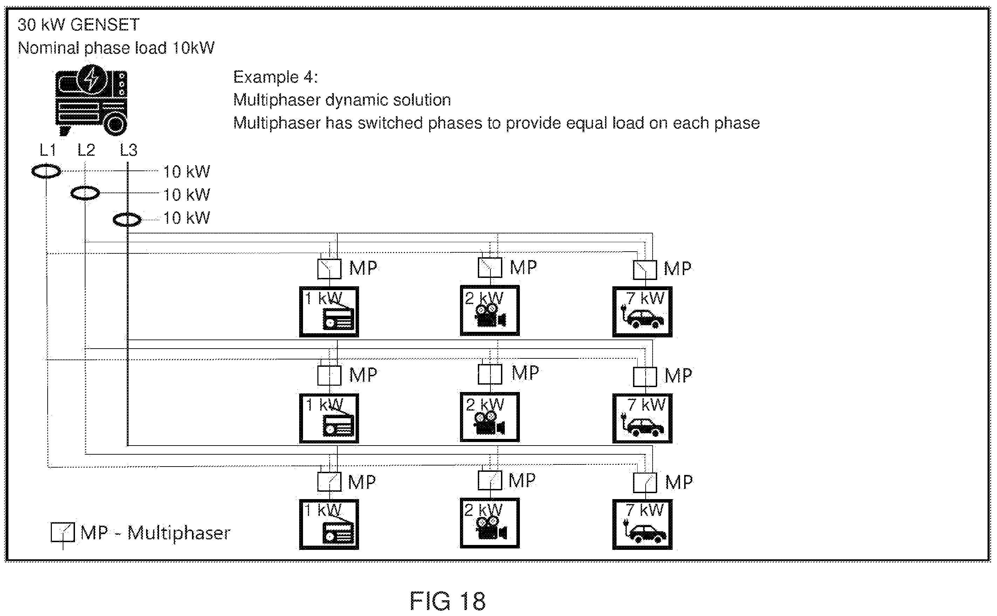

FIG 18 describing dynamic multiphaser solution has exactly the same equipment connected to same sockets and all phases are loaded equally as phases are switched between the consumers.

As of today there is currently no solution available for uninterruptedly balancing loads between phases, event organizers must use much higher output generators than would be actually needed. The multiphaser according to invention in combination with load management controller is an ideal solution in this situation.

## Claims

1. A multiphaser device for uninterrupted AC power switching between power sources having same or different phases having inputs connected separately to separate power sources and a common output connected to a load comprising:
a microcontroller unit MCU (20) for managing switching operations of the multiphaser device;
an AC zero-crossing detection circuit (30) connected to the MCU that measures a voltage and a current of each source to detect a current and a voltage zero-crossing of each power source phase;
a power relay (100, 200, 300) for each power source with an input connected to the power source and an output connected to the common output of the multiphaser device, wherein power relay is connected to the MCU; and
a power relay contact detection circuit (110, 210, 310) connected in parallel with the power relay for detecting a power relay contact state and measuring actual make and break times of the power relay during each power relay action, wherein the power relay contact detection circuit is connected to the MCU for transmitting the power relay contact state to the MCU;
wherein the MCU is operable to control the power relay in response to the measured actual make and break times of the power relay and the exact AC voltage and current zero-crossing times to activate the power relay at the exact AC voltage zero-crossing time advanced by the make time and deactivate the power relay at the exact AC current zero-crossing time advanced by the break time.

2. The multiphaser device according to claim 1, **characterized in that** a semiconductor switch (120, 220, 320) is connected in parallel to each power relay (100, 200, 300) for fast and precise switching of the AC power, and wherein the semiconductor switch is connected to the MCU to control the semiconductor switch operation.

3. The multiphaser device according to claim 1, **characterized in that** the multiphaser device performs three types of switching operation of the power relays: switching on, switching off and switching between power sources.

4. The multiphaser device according to claim 2, **characterized in that** the multiphaser device performs three types of switching operation of the power relays: switching on, switching off and switching between power sources.

5. The multiphaser device according to claim 3, **characterized in that** switching ON power relay, switching OFF power relay and switching phases are done under no load condition exactly at the AC voltage and current zero crossing point controlled by zero-crossing detection.

6. The multiphaser device according to claim 4, **characterized in that** switching ON power relay, switching OFF power relay and switching phases are done under no load condition exactly at the AC voltage and current zero crossing point controlled by the AC zero-crossing detection circuit.

7. The multiphaser device according to claim 1, **characterized in that** the multiphaser device does not comprise a semiconductor switch.

8. A method for uninterrupted switching of AC power between power sources of the same or different phases with the multiphaser device according to any one of claims 1-7, **characterized in that** the method comprises measuring an actual make and break time of each power relay by using the contact detection circuit, wherein the first measurement is done in initial setup of multiphaser device and later during the normal operation the power relay is retested during each power relay action, using software implemented on the microcontroller unit to calculate actual moment of activating and deactivating of each power relay based on make and break times exactly at the AC zero crossing.

9. The method according to claim 8, **characterized in that** when the multiphaser device according to claims 1, 3 and 5 receives a command to switch off the power source the microcontroller calculates the next current zero-crossing and advances the power relay deactivation at time point t1 based on the measured break time and thereafter the actual break event of the power relay at time point t2 takes place exactly at the current zero crossing.

10. The method according to claim 8, **characterized in that** when the multiphaser device according to claims 1, 3 and 5 receives a command switch on the power source the microcontroller calculates the next current zero-crossing and advances the power relay activation at time point t1 based on calculated make time and thereafter the actual make event of the power relay at time point t2 take place exactly in the current zero-crossing.

11. The method according to claim 8, **characterized in that** when the multiphaser device according to claims 1, 3 and 5 receives a command switch from current power source (L1) to target power source (L2) the microcontroller calculates the next current zero-crossing on active power course and the following voltage zero crossing on the target power source, thereafter first power relay (100) is deactivated at state point t1, while advancing deactivation by break time; and the target source power relay (200) is activated at time point t2 in advance to the voltage zero-crossing by make time, thereafter the switching is completed when target source power relay (200) is connected at time point t3.

12. The method according to claim 8, **characterized in that** when the multiphaser device according to claims 2, 4 and 6 receives a command switch off the power source the microcontroller calculates the next current zero-crossing and the semiconductor switch (120) is activated at time point t1 and power relay 100 is opened, when the power relay (100) is opened at time point t2, the semiconductor switch (120) is deactivated at time point t3 and power is cut at AC current zero-crossing to eliminate transients.

13. The method according to claim 8, **characterized in that** when the multiphaser device according to claims 2, 4 and 6 receives a command switch on the power source the microcontroller calculates the next current zero-crossing and the semiconductor switch (120) connects at time point t1 the selected power source at AC voltage zero-crossing, at the same time power relay (100) is connected, the load is taken by semiconductor switch (120) as long as power relay (100) contact is complete at time point t2, thereafter semiconductor switch (120) is deactivated at time point t3.

14. The method according to claim 8, **characterized in that** when the multiphaser device according to claims 2, 4 and 6 receives a command to switch from an active power source (L1) to a target power source (L2) the microcontroller calculates the next current zero-crossing on the active power course and the following voltage zero crossing on the target power source, the current semiconductor switch (120) is activated at time point t1 and the power relay (100) is opened, when the power relay (100) has been opened at time point t2, the semiconductor switch (120) is deactivated at time point t3 and power is cut at AC current zero-crossing, thereafter the target semiconductor switch (220) is activated at time point t4 on the following AC voltage zero crossing and the power relay (200) is connected at time point t4, thereafter the semiconductor switch (220) is deactivated at time point t6 after power relay (200) is connected at time point t5.

## Patentansprüche

1. Mehrphasenvorrichtung zum unterbrechungsfreien Umschalten von Wechselstrom zwischen Leistungsquellen mit gleichen oder unterschiedlichen Phasen, die Eingänge aufweisen, die mit getrennten Leistungsquellen getrennt verbunden sind, und einen gemeinsamen Ausgang aufweisen, der mit einer Last verbunden ist, umfassend:
eine Mikrocontroller-Einheit MCU (20) zum Verwalten der Schaltvorgänge der Mehrphasenvorrichtung;
eine Wechselstrom-Nulldurchgang-Erfassungsschaltung (30), die mit der MCU verbunden ist, die eine Spannung und einen Strom jeder Quelle misst, um einen Strom- und Spannungsnulldurchgang jeder Leistungsquellenphase zu erfassen;
ein Leistungsrelais (100, 200, 300) für jede Leistungsquelle mit einem Eingang, der mit der Leistungsquelle verbunden ist, und einem Ausgang, der mit dem gemeinsamen Ausgang der Mehrphasenvorrichtung verbunden ist, wobei das Leistungsrelais mit der MCU verbunden ist; und
eine Leistungsrelais-Kontakterfassungsschaltung (110, 210, 310), die mit dem Leistungsrelais zum Erfassen eines Leistungsrelais-Kontaktzustands und zum Messen der tatsächlichen Ein- und Ausschaltzeiten des Leistungsrelais während jeder Leistungsrelaisaktion parallel geschaltet ist,
wobei die Leistungsrelais-Kontakterfassungsschaltung mit der MCU zum Übertragen des Leistungsrelais-Kontaktzustands mit der MCU verbunden ist;
wobei die MCU so betreibbar ist, dass sie das Leistungsrelais als Reaktion auf die gemessenen tatsächlichen Ein- und Ausschaltzeiten des Leistungsrelais und die exakten Nulldurchgangszeiten der Wechselspannung und des Stroms steuert, um das Leistungsrelais zu der exakten Nulldurchgangszeit der Wechselspannung zu aktivieren, die um die Einschaltzeit vorverlegt ist, und das Leistungsrelais zu der exakten Nulldurchgangszeit des Wechselstroms zu deaktivieren, die um die Ausschaltzeit vorverlegt ist.

2. Mehrphasenvorrichtung nach Anspruch 1, **dadurch gekennzeichnet, dass** ein Halbleiterschalter (120, 220, 320) zu jedem Leistungsrelais (100, 200, 300) zum schnellen und präzisen Umschalten der Wechselstromleistung parallel geschaltet ist, und wobei der Halbleiterschalter mit der MCU verbunden ist, um den Halbleiterschaltervorgang zu steuern.

3. Mehrphasenvorrichtung nach Anspruch 1, **dadurch gekennzeichnet, dass** die Mehrphasenvorrichtung drei Arten von Schaltvorgängen der Leistungsrelais durchführt: Einschalten, Ausschalten und Umschalten zwischen Leistungsquellen.

4. Mehrphasenvorrichtung nach Anspruch 2, **dadurch gekennzeichnet, dass** die Mehrphasenvorrichtung drei Arten von Schaltvorgängen der Leistungsrelais durchführt: Einschalten, Ausschalten und Umschalten zwischen Leistungsquellen.

5. Mehrphasenvorrichtung nach Anspruch 3, **dadurch gekennzeichnet, dass** das Einschalten des Leistungsrelais, das Ausschalten des Leistungsrelais und das Umschalten der Phasen im Leerlauf genau am Nulldurchgangspunkt der Wechselspannung und des Stroms erfolgt, der durch die Nulldurchgangserfassung gesteuert wird.

6. Mehrphasenvorrichtung nach Anspruch 4, **dadurch gekennzeichnet, dass** das Einschalten des Leistungsrelais, das Ausschalten des Leistungsrelais und das Umschalten der Phasen im Leerlauf genau am Nulldurchgangspunkt der Wechselspannung und des Stroms erfolgt, der durch die Wechselstrom-Nulldurchgang-Erfassungsschaltung gesteuert wird.

7. Mehrphasenvorrichtung nach Anspruch 1, **dadurch gekennzeichnet, dass** die Mehrphasenvorrichtung keinen Halbleiterschalter umfasst.

8. Verfahren zum unterbrechungsfreien Umschalten von Wechselstrom zwischen Leistungsquellen gleicher oder unterschiedlicher Phasen mit der Mehrphasenvorrichtung nach einem der Ansprüche 1-7, **dadurch gekennzeichnet, dass** das Verfahren das Messen einer tatsächlichen Ein- und Ausschaltzeit jedes Leistungsrelais unter Verwendung der Kontakterfassungsschaltung umfasst, wobei die erste Messung bei der anfänglichen Einrichtung der Mehrphasenvorrichtung durchgeführt wird und später während des normalen Vorgangs das Leistungsrelais während jeder Leistungsrelaisaktion erneut getestet wird, wobei eine Software verwendet wird, die in der Mikrocontroller-Einheit implementiert ist, um den tatsächlichen Zeitpunkt des Aktivierens und Deaktivierens jedes Leistungsrelais anhand der Ein- und Ausschaltzeiten exakt zum Wechselstrom-Nulldurchgang zu berechnen.

9. Verfahren nach Anspruch 8, **dadurch gekennzeichnet, dass**, wenn die Mehrphasenvorrichtung nach Anspruch 1, 3 und 5 einen Befehl zum Abschalten der Leistungsquelle empfängt, der Mikrocontroller den nächsten Stromnulldurchgang berechnet und die Deaktivierung des Leistungsrelais zum Zeitpunkt t1 anhand der gemessenen Ausschaltzeit vorverlegt und anschließend das tatsächliche Ausschaltereignis des Leistungsrelais zum Zeitpunkt t2 exakt beim Stromnulldurchgang stattfindet.

10. Verfahren nach Anspruch 8, **dadurch gekennzeichnet, dass**, wenn die Mehrphasenvorrichtung nach den Ansprüchen 1, 3 und 5 einen Befehl zum Einschalten der Leistungsquelle empfängt, der Mikrocontroller den nächsten Stromnulldurchgang berechnet und die Aktivierung des Leistungsrelais zum Zeitpunkt t1 anhand der berechneten Einschaltzeit vorverlegt, und dass anschließend das tatsächliche Einschaltereignis des Leistungsrelais zum Zeitpunkt t2 exakt im Stromnulldurchgang stattfindet.

11. Verfahren nach Anspruch 8, **dadurch gekennzeichnet, dass**, wenn die Mehrphasenvorrichtung nach den Ansprüchen 1, 3 und 5 einen Befehl zum Umschalten von der aktuellen Leistungsquelle (L1) auf die Zielleistungsquelle (L2) empfängt, der Mikrocontroller den nächsten Stromnulldurchgang auf dem aktiven Leistungsverlauf und den folgenden Spannungsnulldurchgang auf der Zielleistungsquelle berechnet, anschließend das erste Leistungsrelais (100) zum Zeitpunkt t1 deaktiviert wird, während die Deaktivierung um die Ausschaltzeit vorverlegt wird; und das Zielleistungsquellen-Leistungsrelais (200) zum Zeitpunkt t2 vor dem Spannungsnulldurchgang um die Einschaltzeit aktiviert wird, wobei anschließend das Umschalten abgeschlossen ist, wenn das Zielleistungsquellen-Leistungsrelais (200) zum Zeitpunkt t3 verbunden ist.

12. Verfahren nach Anspruch 8, **dadurch gekennzeichnet, dass**, wenn die Mehrphasenvorrichtung nach Anspruch 2, 4 und 6 einen Befehl zum Ausschalten der Leistungsquelle empfängt, der Mikrocontroller den nächsten Stromnulldurchgang berechnet und der Halbleiterschalter (120) zum Zeitpunkt t1 aktiviert und das Leistungsrelais (100) geöffnet wird, wenn das Leistungsrelais (100) zum Zeitpunkt t2 geöffnet wird, der Halbleiterschalter (120) zum Zeitpunkt t3 deaktiviert wird und die Leistung beim Wechselstrom-Nulldurchgang unterbrochen wird, um Transienten zu eliminieren.

13. Verfahren nach Anspruch 8, **dadurch gekennzeichnet, dass**, wenn die Mehrphasenvorrichtung nach Anspruch 2, 4 und 6 einen Befehl zum Einschalten der Leistungsquelle empfängt, der Mikrocontroller den nächsten Stromnulldurchgang berechnet und der Halbleiterschalter (120) zum Zeitpunkt t1 die ausgewählte Leistungsquelle beim Wechselspannung-Nulldurchgang verbindet, gleichzeitig das Leistungsrelais (100) verbunden ist, die Last durch den Halbleiterschalter (120) übernommen wird, solange der Kontakt des Leistungsrelais (100) zum Zeitpunkt t2 vollständig ist, wobei anschließend der Halbleiterschalter (120) zum Zeitpunkt t3 deaktiviert wird.

14. Verfahren nach Anspruch 8, **dadurch gekennzeichnet, dass**, wenn die Mehrphasenvorrichtung nach Anspruch 2, 4 und 6 einen Befehl zum Umschalten von einer Leistungsquelle (L1) auf eine Zielleistungsquelle (L2) empfängt, der Mikrocontroller den nächsten Stromnulldurchgang auf dem aktiven Leistungsverlauf und den folgenden Spannungsnulldurchgang auf der Zielleistungsquelle berechnet, der aktuelle Halbleiterschalter (120) zum Zeitpunkt t1 aktiviert wird und das Leistungsrelais (100) geöffnet wird, wenn das Leistungsrelais (100) zum Zeitpunkt t2 geöffnet wurde, der Halbleiterschalter (120) zum Zeitpunkt t3 deaktiviert wird und die Leistung beim Wechselstrom-Nulldurchgang unterbrochen wird, anschließend der Zielhalbleiterschalter (220) zum Zeitpunkt t4 beim folgenden Wechselspannung-Nulldurchgang aktiviert wird und das Leistungsrelais (200) zum Zeitpunkt t4 verbunden wird, anschließend der Halbleiterschalter (220) zum Zeitpunkt t6 deaktiviert wird, nachdem das Leistungsrelais (200) zum Zeitpunkt t5 verbunden ist.

## Revendications

1. Dispositif de mise en multiphasé pour une commutation d'alimentation de courant alternatif sans interruption entre des sources d'alimentation présentant des phases identiques ou différentes, ayant des entrées connectées séparément à des sources d'alimentation séparées et une sortie commune connectée à une charge, comprenant :
une unité microcontrôleur MCU (20) pour gérer les opérations de commutation du dispositif de mise en multiphasé ;
un circuit de détection de passage par zéro d'un courant alternatif (30) connecté à la MCU qui mesure une tension et un courant de chaque source pour détecter un passage par zéro du courant et de la tension de chaque phase de source d'alimentation ;
un relais d'alimentation (100, 200, 300) pour chaque source d'alimentation avec une entrée connectée à la source d'alimentation et une sortie connectée à la sortie commune du dispositif de mise en multiphasé, dans lequel le relais d'alimentation est connecté à la MCU ; et
un circuit de détection de contact de relais d'alimentation (110, 210, 310) connecté en parallèle avec le relais d'alimentation pour détecter un état de contact de relais d'alimentation et mesurer les temps de fermeture et d'ouverture réels du relais d'alimentation durant chaque actionnement du relais d'alimentation, dans lequel le circuit de détection de contact de relais d'alimentation est connecté à la MCU pour transmettre l'état de contact du relais d'alimentation à la MCU ;
dans lequel la MCU est capable de contrôler le relais d'alimentation en réponse aux temps de fermeture et d'ouverture réels mesurés du relais d'alimentation et aux temps de passage par zéro exacts de la tension et du courant alternatifs pour activer le relais d'alimentation au temps de passage par zéro exact de la tension alternative avancé du temps de fermeture, et pour désactiver le relais d'alimentation au temps de passage par zéro exact du courant alternatif avancé du temps d'ouverture.

2. Dispositif de mise en multiphasé selon la revendication 1, **caractérisé en ce qu'**un commutateur à semi-conducteur (120, 220, 320) est connecté en parallèle à chaque relais d'alimentation (100, 200, 300) pour une commutation rapide et précise de l'alimentation de courant alternatif, et dans lequel le commutateur à semi-conducteur est connecté à la MCU pour contrôler l'actionnement du commutateur à semi-conducteur.

3. Dispositif de mise en multiphasé selon la revendication 1, **caractérisé en ce que** le dispositif de mise en multiphasé effectue trois types d'opérations de commutation des relais d'alimentation : mise en marche, mise à l'arrêt, et commutation entre des sources d'alimentation.

4. Dispositif de mise en multiphasé selon la revendication 2, **caractérisé en ce que** le dispositif de mise en multiphasé effectue trois types d'opérations de commutation des relais d'alimentation : mise en marche, mise à l'arrêt, et commutation entre des sources d'alimentation.

5. Dispositif de mise en multiphasé selon la revendication 3, **caractérisé en ce que** la mise en marche du relais d'alimentation, la mise à l'arrêt du relais d'alimentation et la commutation des phases sont effectuées dans une condition sans charge exactement au point de passage par zéro de la tension et du courant alternatifs contrôlé par la détection de passage par zéro.

6. Dispositif de mise en multiphasé selon la revendication 4, **caractérisé en ce que** la mise en marche du relais d'alimentation, la mise à l'arrêt du relais d'alimentation et la commutation des phases sont effectuées dans une condition sans charge exactement au point de passage par zéro de la tension et du courant alternatifs contrôlé par le circuit de détection de passage par zéro du courant alternatif.

7. Dispositif de mise en multiphasé selon la revendication 1, **caractérisé en ce que** le dispositif de mise en multiphasé ne comprend pas de commutateur à semi-conducteur.

8. Procédé de commutation sans interruption d'un courant alternatif entre des sources d'alimentation de phases identiques ou différentes avec le dispositif de mise en multiphasé selon l'une quelconque des revendications 1 à 7, **caractérisé en ce que** le procédé comprend la mesure d'un temps réel de fermeture et d'ouverture de chaque relais d'alimentation en utilisant le circuit de détection de contact, dans lequel la première mesure est effectuée lors de la configuration initiale du dispositif de mise en multiphasé, et plus tard, durant le fonctionnement normal, le relais d'alimentation est retesté lors de chaque actionnement du relais d'alimentation, en utilisant un logiciel implémenté sur l'unité microcontrôleur pour calculer le moment réel d'activation et de désactivation de chaque relais d'alimentation sur la base des temps de fermeture et d'ouverture exactement au passage par zéro du courant alternatif.

9. Procédé selon la revendication 8, **caractérisé en ce que**, quand le dispositif de mise en multiphasé selon les revendications 1, 3 et 5 reçoit une commande de mise à l'arrêt de la source d'alimentation, le microcontrôleur calcule le prochain passage par zéro du courant et avance la désactivation du relais d'alimentation à l'instant t1 sur la base du temps d'ouverture mesuré, et ensuite l'événement d'ouverture réel du relais d'alimentation à l'instant t2 a lieu exactement au passage par zéro du courant.

10. Procédé selon la revendication 8, **caractérisé en ce que**, quand le dispositif de mise en multiphasé selon les revendications 1, 3 et 5 reçoit une commande de mise en marche de la source d'alimentation, le microcontrôleur calcule le prochain passage par zéro du courant et avance l'activation du relais d'alimentation à l'instant t1 sur la base du temps de fermeture calculé, et ensuite l'événement de fermeture réel du relais d'alimentation à l'instant t2 a lieu exactement au passage par zéro du courant.

11. Procédé selon la revendication 8, **caractérisé en ce que**, quand le dispositif de mise en multiphasé selon les revendications 1, 3 et 5 reçoit une commande de commutation de la source d'alimentation actuelle (L1) vers la source d'alimentation cible (L2), le microcontrôleur calcule le prochain passage par zéro du courant sur la courbe de puissance active et le prochain passage par zéro de la tension sur la source d'alimentation cible, ensuite le premier relais d'alimentation (100) est désactivé au point d'état t1, tout en avançant la désactivation du temps d'ouverture ; et le relais d'alimentation (200) de la source cible est activé à l'instant t2 en avance du temps de fermeture sur le passage par zéro de la tension, ensuite la commutation est achevée quand le relais d'alimentation (200) de la source cible est connecté à l'instant t3.

12. Procédé selon la revendication 8, **caractérisé en ce que**, quand le dispositif de mise en multiphasé selon les revendications 2, 4 et 6 reçoit une commande de mise à l'arrêt de la source d'alimentation, le microcontrôleur calcule le prochain passage par zéro du courant et le commutateur à semi-conducteur (120) est activé à l'instant t1 et le relais d'alimentation (100) est ouvert, et quand le relais d'alimentation (100) est ouvert à l'instant t2, le commutateur à semi-conducteur (120) est désactivé à l'instant t3 et l'alimentation est coupée au passage par zéro du courant alternatif pour éliminer les courants transitoires.

13. Procédé selon la revendication 8, **caractérisé en ce que**, quand le dispositif de mise en multiphasé selon les revendications 2, 4 et 6 reçoit une commande de mise en marche de la source d'alimentation, le microcontrôleur calcule le prochain passage par zéro du courant et le commutateur à semi-conducteur (120) connecte à l'instant t1 la source d'alimentation sélectionnée au passage par zéro de la tension alternative, et dans le même temps que le relais d'alimentation (100) est connecté, la charge est prise par le commutateur à semi-conducteur (120) tant que le contact du relais d'alimentation (100) est complet à l'instant t2, ensuite le commutateur à semi-conducteur (120) est désactivé à l'instant t3.

14. Procédé selon la revendication 8, **caractérisé en ce que**, quand le dispositif de mise en multiphasé selon les revendications 2, 4 et 6 reçoit une commande de commutation d'une source d'alimentation active (L1) à une source d'alimentation cible (L2), le microcontrôleur calcule le prochain passage par zéro du courant sur la courbe de puissance active et le prochain passage par zéro de la tension sur la source d'alimentation cible, le commutateur à semi-conducteur (120) actuel est activé à l'instant t1 et le relais d'alimentation (100) est ouvert, et quand le relais d'alimentation (100) a été ouvert à l'instant t2, le commutateur à semi-conducteur (120) est désactivé à l'instant t3 et l'alimentation est coupée au passage par zéro du courant alternatif, ensuite le commutateur à semi-conducteur (220) cible est activé à l'instant t4 lors du prochain passage par zéro de la tension alternative et le relais d'alimentation (200) est connecté à l'instant t4, ensuite le commutateur à semi-conducteur (220) est désactivé à l'instant t6 après que le relais d'alimentation (200) a été connecté à l'instant t5.
